# EUROPEAN PATENT SPECIFICATION

(11) **EP 3 944 469 B1**
(45) Date of publication and mention of the grant of the patent: **18.09.2024**
(21) Application number: 20187149.8
(22) Date of filing: 22.07.2020
(51) Int. Cl.: H02K 3/52, H02K 3/50, H02K 11/05, H02K 11/33, H02K 5/20, H02K 9/19, H02K 9/197

(54) **ELECTRIC MOTOR**
ELEKTROMOTOR
MOTEUR ÉLECTRIQUE

(43) Date of publication of application: 26.01.2022
(73) Proprietor: Mahle International GmbH, 70376 Stuttgart (DE)
(72) Inventor: AHEC, Ziga, 1290 Grospulje (SI); BABIC, Gregor, 1312 Videm-Dobrepolje (SI); DIMOVSKI, Jan, 1000 Ljubljana (SI); VERDEV, Luka, 3320 Velenje (SI)
(74) Representative: BRP Renaud & Partner mbB Rechtsanwälte Patentanwälte Steuerberater

(56) References cited:
- EP-A1- 2 544 340
- US-A1- 2007 197 072
- US-A1- 2008 048 454
- US-A1- 2013 264 899
- US-A1- 2020 059 124
- US-A1- 2020 220 416
- US-B2- 7 545 063
- US-B2- 7 633 198

## Description

The invention relates to an electric motor according to the introductory clause of Claim 1.

An electric motor is known for example from DE 10 2011 112 820 A1 and DE 10 2012 106 471 A1. The electric motor usually comprises a rotor and a stator, which interact with one another electromagnetically. Usually, the electric motor also comprises an inverter, which is electrically connected with the stator. For this, the electric motor has phase terminals which are directed from the stator to the inverter. The inverter usually comprises here a capacitor plate with capacitors, a transistor plate with transistors and a control board, and converts the direct current into the three-phase current for the stator. Disadvantageously, the conventional phase terminals do not enable a secure and simple connecting between the stator and the inverter.

US 2020/0220416 A1 discloses an electric motor with phase terminals. The phase terminals are arranged in a support member on a holder. The axial position of the phase terminal in the support member is given by engaging of a protrusion formed on the phase terminal and a stopping member formed on the support member.

US 2013/0264899 A1 discloses a stator for a motor. In the stator, coil ends are welded with a module member and the module member is welded to phase terminals via a busbar.

US 2020/0059124 A1 discloses a bus holder for a stator of an electric motor. On the bus holder, phase terminals and busbars are clamped. Stator coil ends are welded to the busbars and the busbars are welded to the phase terminals.

US 7 545 063 B2 and US 7 633 198 B2 discloses other forms of phase terminals.

It is therefore the object of the invention to indicate for an electric motor of the generic type an improved or at least alternative embodiment, in which the described disadvantages are overcome.

This problem is solved according to the invention through the subject of the independent Claim 1. Advantageous embodiments are the subject of the dependent claims.

An electric motor comprises a rotor, rotatable about a rotation axis, and a stator, which interact with one another electromagnetically. The stator comprises a plurality of stator coils, wherein at least some of the stator coils are electrically contacted via their coil wires directly with three electric phases. The electric motor further comprises for the respective phase at least one electrically conductive US 7 545 063 B2, US 7 633 198 B2, EP 2 544 340 A1, US 2008/0048454 A1 and US 2007/0197072 A1 discloses other forms of phase terminals.

It is therefore the object of the invention to indicate for an electric motor of the generic type an improved or at least alternative embodiment, in which the described disadvantages are overcome.

This problem is solved according to the invention through the subject of the independent Claim 1. Advantageous embodiments are the subject of the dependent claims.

An electric motor comprises a rotor, rotatable about a rotation axis, and a stator, which interact with one another electromagnetically. The stator comprises a plurality of stator coils, wherein at least some of the stator coils are electrically contacted via their coil wires directly with three electric phases. The electric motor further comprises for the respective phase at least one electrically conductive phase terminal, which is connected with the associated coil wire in an electrically conductive manner. The phase terminals are secured on a stator housing of the stator. According to the invention, an elastically deformable base i.e. an elastically deformable underlay plate is directly clamped between the respective phase terminal and the stator housing of the stator. The base biases the respective phase terminal towards an associated contact of an inverter which can be positioned on the stator housing and can be electrically contacted with the stator. In other words, the base is used as biasing means to achieve adequate pressure for contact the respective phase terminal with the inverter. In this way, the contact between the stator and the inverter can be simplified.

According to the invention, the respective phase terminal can comprise a contact region projecting axially from the stator for contacting an inverter, and a securing region for securing on the stator housing. The securing region and the contact region can be formed integrally with respect to one another i.e. in one piece from a single folded piece of sheet metal. The securing region is aligned transversely to the rotation axis, and the contact region projects perpendicularly from the securing region. The respective phase terminal can therefore be formed in an L-shaped manner. Advantageously, the axially width of the contact region can grow in direction to the securing region to achieve an adequate pressure by contact the respective phase terminal with the inverter. Furthermore, the phase terminal can comprise a clamping region for securing the associated coil wire. The clamping region is then suitably formed integrally on the securing region. Advantageously, the phase terminals can be secured on the stator housing in a symmetrically distributed manner around the rotation axis.

According to the invention, the electric motor has a pressure ring which is secured on the stator housing. The pressure ring then presses the respective phase terminal against the stator housing and thereby secures the respective phase terminal on the stator housing. The pressure ring can have two position projections for the respective phase terminal and two position openings can be formed in the respective phase terminal. The position terminals then engage into the position openings and thereby the phase terminals are secured in the correct position on the stator housing.

Advantageously, the respective phase terminal can lie radially externally from the associated coil wire and thereby the associated coil wire can engage radially into the respective phase terminal. Advantageously, a secure and simple connecting of the stator with an inverter can be thereby achieved.

In an advantageous embodiment of the electric motor, provision is made that the electric motor has an inverter. The inverter comprises here a capacitor plate with a plurality of capacitors, a plurality of transistor plates with respectively a plurality of transistors, a cooling plate, and a control board. The inverter is fastened axially on the stator and facing the phase terminals, wherein the phase terminals engage axially into the inverter and are electrically contacted with the transistor plates of the inverter. Advantageously, the control board can be arranged facing the stator, and the capacitor plate can be arranged between the control board and the transistor plates. The phase terminals are then directed axially into the inverter and past the control board and the capacitor plate to the transistor plates.

Advantageously, the inverter can comprise a hollow-cylindrical carrier with a central axis, which carrier carries the transistor plates, the capacitor plate and the control board and surrounds them to the exterior in circumferential direction. The respective transistor plates, the capacitor plate and the control board lie in the carrier axially one over another and are electrically connected with one another. The carrier is fastened here on the stator, wherein the central axis of the carrier coincides with the rotation axis of the rotor. In connection with the present invention, the term "carry" means that the capacitor plate, the transistor plates and the control board are aligned to each other via the carrier. The carrier is preferably formed from plastic and is not electrically conductive. The carrier protects the capacitor plate, the transistor plates and the control board with to the exterior and aligns these with respect to one another. The inverter here is a cohesive and ready-to-fit assembly unit with the carrier, the capacitor plate, the transistor plates, the cooling plate, and the control board. The inverter can thereby be finish-mounted independently of further elements of the electric motor.

Advantageously, provision can be made that a carrier ring is integrally formed in the carrier. The carrier ring here is ring-shaped and is aligned transversely to the central axis. The carrier ring divides an interior of the carrier into two axially adjacent regions, wherein in the first region the transistor plates are received and secured, and in the second region the capacitor plate and the control board are received and secured. The carrier ring is configured in a ring-shaped manner so that an opening, lying centrally, is formed in the carrier ring.

The transistor plates are then fastened on the carrier ring facing away from the stator and distributed running around the central axis, and in a clamping manner. For this, provision can be made that on the carrier ring at least one undercut securing element and at least one clip are formed for the respective transistor plate. The respective transistor plate is then fastened by means of the at least one securing element and of the at least one clip on the carrier ring in a clamping manner. Appropriately, the at least one securing element and the at least one clip are arranged lying opposite one another or respectively the at least one securing element is associated with one side and the at least one clip is associated with an opposite side of the respective transistor plate. The respective transistor plate can then be directed under the at least one securing element and can be clipped on the carrier ring by the at least one clip. Preferably, two securing elements and two clips are formed on the carrier ring for the respective transistor plate, so that a tilting of the respective transistor plate on the carrier ring is prevented.

In an advantageous embodiment of the electric motor, provision is made that a plurality of contact pins is cast into the carrier ring. The contact pins are aligned axially from the transistor plates to the control board and to the stator. The respective transistor plate is wire bonded via electrically conductive wires with the respective associated contact pins and thereby contacted electrically with the contact pins. The contact pins can be arranged here in the second axial region of the carrier and can be contacted with the respective transistor plates via respectively a contact opening in the carrier ring. The respective contact pin has an end-side thickening towards the control board, and the control board has respectively a receiving opening for the respective thickening. The respective thickening engages into the respective receiving opening and thereby the contact pin is fastened in the control board in a clamping manner and is electrically contacted with the control board.

It shall be understood that an electrically conductive contact point is formed on the control board around or in the receiving opening, so that the respective contact pin is electrically contacted via the respective contact point with the electronic elements of the control board. The control board is arranged here spaced apart from and parallel to the transistor plates. The distance between the control board and the transistor plates corresponds here approximately to the axial height of the contact pins. The contact pins are arranged here suitably distributed around the central axis of the carrier, so that all transistor plates can be contacted with the control board.

Appropriately, the carrier and therefore the carrier ring are formed of plastic and are not electrically conductive. The respective contact pin can be metallic, for example. It shall be understood that at least some regions of the respective contact pins are not cast into the carrier ring or respectively are open towards the exterior and serve for a contacting with the control board and with the respective transistor plate. It shall also be understood that a plurality of contact pins can also be associated with the respective transistor plate. It shall also be understood that the contact pin is electrically contacted with transistors of the respective transistor plate via electrically conductive lines. Through the cast-in contact pin, its position in the carrier is predefined, so that the contacting of the respective transistor plate with the control board is simplified.

In an advantageous embodiment of the electric motor, provision is made that the capacitor plate, an elastically deformable foam plate and a pressure plate are arranged on the carrier ring, facing away from the transistor plates. In the carrier ring in addition a plurality of axial slots is formed, in which respectively a contact busbar is received. The pressure plate is firmly connected with the cooling plate and presses the capacitor plate against the contact busbars via the foam plate. The respective contact busbar is pressed here between the respective transistor plate and the capacitor plate and thereby the transistor plates are electrically contacted with the capacitor plate. Through the foam plate and the pressure plate, the respective contact busbar is secured reliably between the capacitor plate and the respective transistor plate. The contact busbar appropriately has electrically conductive paths or is formed entirely of an electrically conductive material.

In an advantageous embodiment of the electric motor, provision is made that the cooling plate is ring-shaped and is able to be flowed through by a cooling fluid. The cooling plate is fastened here on the pressure plate and facing away from the stator, and lies against the transistor plates in a heat-transferring manner. The capacitors of the capacitor plate are directed axially through a central opening of the ring-shaped cooling plate and are pressed radially against the cooling plate in a heat-transferring manner. Thereby, the transistors and the capacitors can be cooled effectively. In order to increase the cooling capacity of the cooling plate, ribs can be formed in a cooling channel of the cooling plate, which channel is able to be flowed through. The cooling fluid can be water, for example.

In an advantageous embodiment of the electric motor, provision is made that the inverter comprises two battery clamps, which are identical to one another, with respectively three pole contacts for contacting with the capacitor plate. The battery clamps are fastened centrally on the capacitor plate and are aligned axially to the transistor plates. The respective battery clamp is formed here by a connecting piece with a dielectric casing and with internal electrically conductive lines. The pole contacts of the one battery clamp and the pole contacts of the other battery clamp are arranged here on the capacitor plate in a circle and alternating with respect to one another in a circle. Advantageously, provision can be made that the battery clamps are directed outwards through an opening of the ring-shaped carrier ring and between the transistor plates which are distributed around the central axis.

The identical battery clamps simplify the structure of the inverter. Through the central arrangement of the battery clamps, in addition negative effects and losses in the inverter can be minimized. Appropriately, the one battery clamp is associated with the plus pole and the other battery clamp is associated with the minus pole. The pole contacts of the one battery clamp are then the plus pole contacts and the pole contacts of the other battery clamp are then the minus pole contacts. On the capacitor plate, the plus pole contacts and the minus pole contacts then alternate with respect to one another in a circle. Through this advantageous configuration of the battery clamps, negative effects in the inverter can be minimized.

Advantageously, the respective battery clamp can have a first bridge, parallel to the capacitor plate, which bridge connects the central pole contact with one lateral pole contact in an electrically conductive manner. The respective battery clamp can, furthermore, have a second bridge, parallel to the capacitor plate, which bridge connects the central pole contact with the other lateral pole contact in an electrically conductive manner. The first bridge and the second bridge are offset axially with respect to one another and are aligned at an angle with respect to one another. Advantageously, the first bridge of the one battery clamp respectively bridges the second bridge of the other battery clamp, so that the pole contacts of the one battery clamp and the pole contacts of the other battery clamp are arranged alternating with respect to one another in a circle. The battery clamps can be positioned here in a particularly space-saving manner on the capacitor plate and through the produced symmetry, negative effects and losses in the inverter can be minimized.

Further important features and advantages of the invention will emerge from the subclaims, from the drawings and from the associated figure description, with the aid of the drawings.

It shall be understood that the features mentioned above and to be explained further below are able to be used not only in the respectively indicated combination, but also in other combinations or in isolation, without departing from the scope of the present invention.

Preferred example embodiments of the invention are illustrated in the drawings and are explained further in the following description, wherein the same reference numbers refer to identical or similar or functionally identical components.

There are shown, respectively diagrammatically
- Figs. 1 to 3: an exploded view and further views of an inverter according to the invention;
- Fig. 4: a view of a carrier in the inverter according to the invention;
- Figs. 5 to 7: views of the carrier with transistor plates in the inverter according to the invention;
- Figs. 8 and 9: an exploded view and a view of a capacitor plate with battery clamps in the inverter according to the invention;
- Fig. 10: a view of the individual battery clamp in the inverter according to the invention;
- Figs. 11 and 12: views of the two battery clamps in the inverter according to the invention;
- Fig. 13: a view of the carrier with the transistor plates and a cooling plate in the inverter according to the invention;
- Fig. 14: a view of the cooling plate with transistors in the inverter according to the invention;
- Figs. 15 and 16: views of the cooling plate in the inverter according to the invention;
- Fig. 17: a view of the carrier with a foam plate in the inverter according to the invention;
- Fig. 18: a view of the carrier with a pressure plate in the inverter according to the invention;
- Fig. 19: a view of the carrier with a control board in the inverter according to the invention;
- Figs. 20 and 21: views of the inverter according to the invention without and with a cover;
- Fig. 22: a sectional view of the inverter according to the invention;
- Fig. 23: an exploded view of an electric motor according to the invention with the inverter according to the invention;
- Fig. 24: a sectional view of the electric motor according to the invention;
- Fig. 25: a view of the electric motor according to the invention, without the inverter;
- Figs. 26 and 27: views of a phase terminal in the electric motor according to the invention

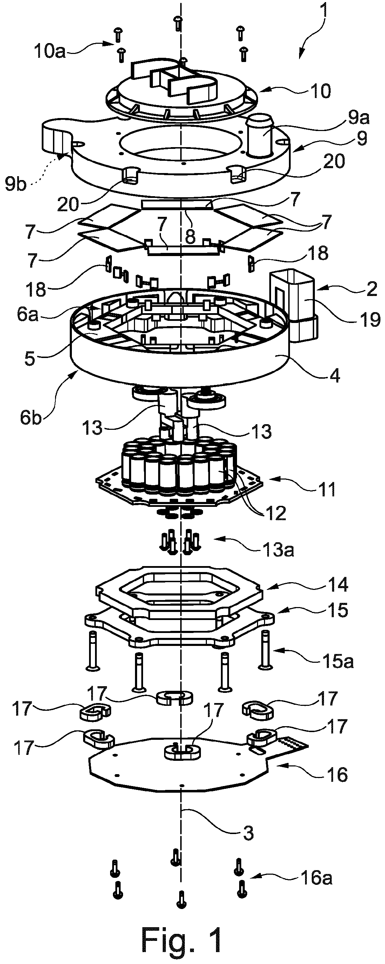

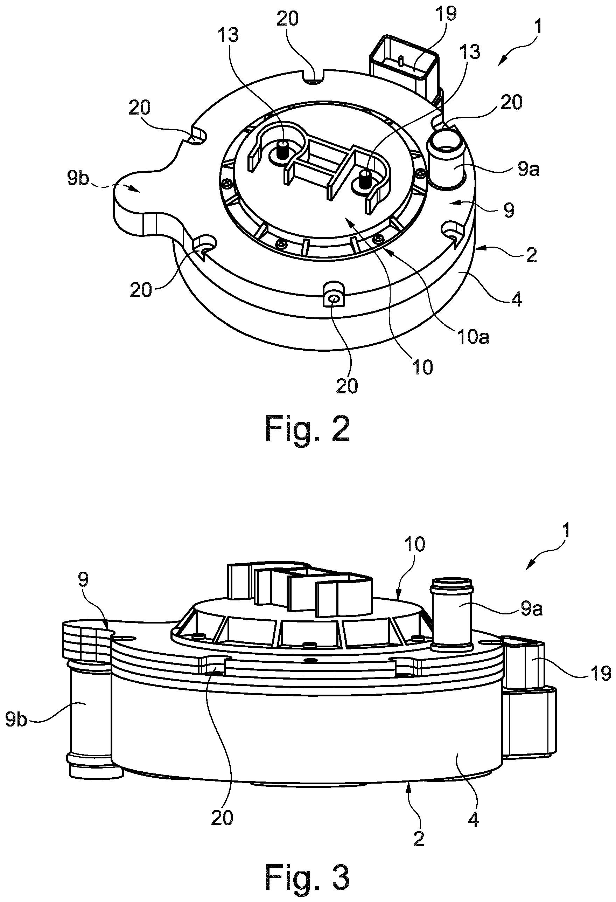

Fig. 1 shows an exploded view of an inverter 1 according to the invention for an electric motor. The inverter 1 comprises here a carrier 2 with a central axis 3. The carrier 2 has here a wall 4 and a ring-shaped carrier ring 5. The wall 4 runs around the central axis 3 and is aligned axially. The carrier ring 5 is formed integrally on the wall 3 and is aligned radially inwards. The carrier ring 5 divides the carrier 2 into a first region 6a and into a second region 6b, which are axially adjacent. From the first region 6a a plurality of transistor plates 7 with transistors 8, a cooling plate 9 and a cover 10 of the inverter 1 are mounted. From the second region 6b a capacitor plate 11 with capacitors 12, two battery clamps 13, a foam plate 14, a pressure plate 15, a control board 16 and several iron cores 17 are mounted. The transistor plates 7 are electrically contacted with the capacitor plate 11 by means of a plurality of contact busbars 18 through the carrier ring 5. In addition, a connection 19 for the control board 16 is formed on the carrier 2. The inverter 1 further comprises a screw assembly 10a for the cover 10, a screw assembly 13a for the battery clamps 13, a screw assembly 15a for the pressure plate 15 and a screw assembly 16a for the control board 16. Further structure of the inverter 1 is explained in more detail with the aid of Fig. 2 to Fig. 22.

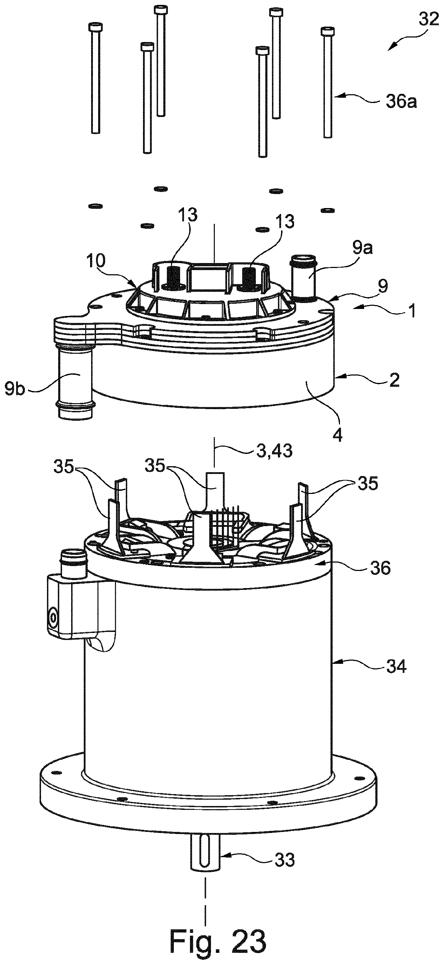

Fig. 2 and Fig. 3 show views of the assembled inverter 1 from a side facing the first region 6a of the carrier 2. In the inverter 1 the carrier 2 carries all further elements of the inverter 1, so that the inverter 1 forms a cohesive and ready-to-fit mounting unit. In other words, the inverter 1 can be assembled independently of further elements of the electric motor - see in this respect also Fig. 23. As can be seen in Fig. 2, the two battery clamps 13 - which are appropriately associated with the plus pole and the minus pole - project out from the cover 10. The cooling plate 9 is able to be flowed through by a cooling fluid - water, for example - and has an inlet 9a and an outlet 9b for the cooling fluid. In addition, a plurality of screw openings 20 for securing the inverter 1 in the electric motor 32 is formed on the cooling plate 9 - see Fig. 23 with regard to this.

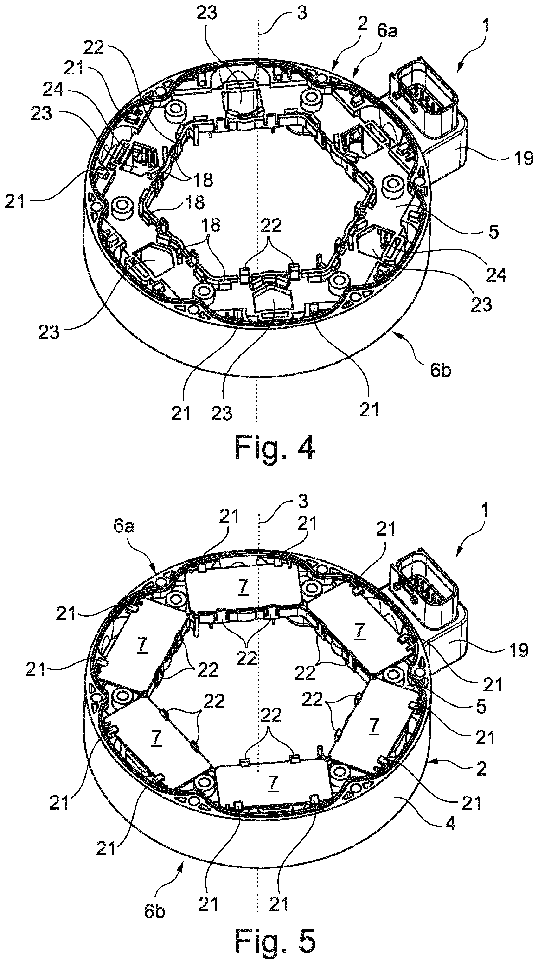

Fig. 4 shows a view of the carrier 2 from a side facing the first region 6a of the carrier 2. Here, the contact busbars 18 are already received in the carrier ring 5 of the carrier 2. For this, a plurality of slots is formed in the carrier ring 5, in which the contact busbars 18 are received and axially aligned.

Fig. 5 shows a view of the carrier 2 with the transistor plates 7 from a side facing the first region 6a of the carrier 2. The transistor plates 7 are arranged here running around the central axis 3 and in a distributed manner, and are secured on the carrier ring 5 in a clamping or respectively force-fitting manner. For this, on the carrier ring 5 for the respective transistor plate 7 respectively two undercut securing elements 21 and two clips 22 are formed. The respective securing elements 21 are arranged here radially outwardly and the respective clips 22 are arranged radially inwardly. On the securing of the respective transistor plate 7, the latter is pushed with one side under the securing elements 21 and on an opposite side is clipped with the carrier ring 5 via the clips 22.

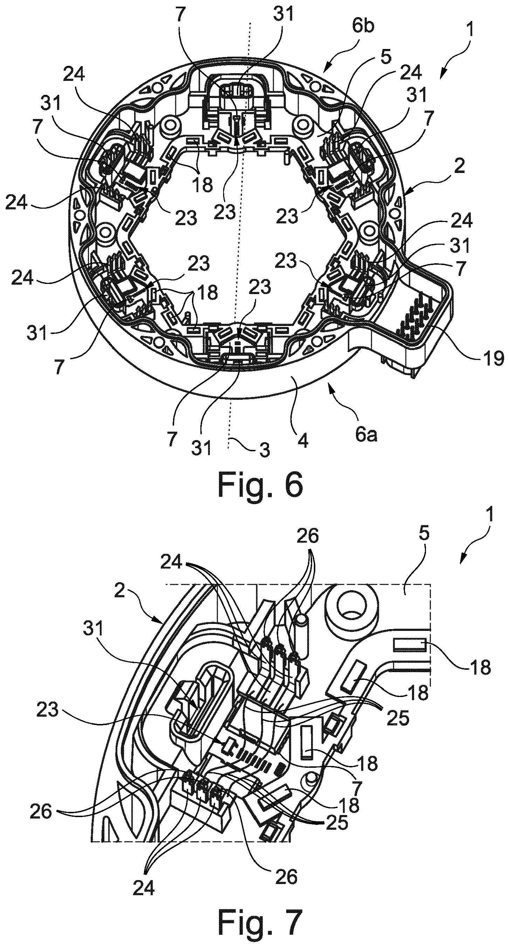

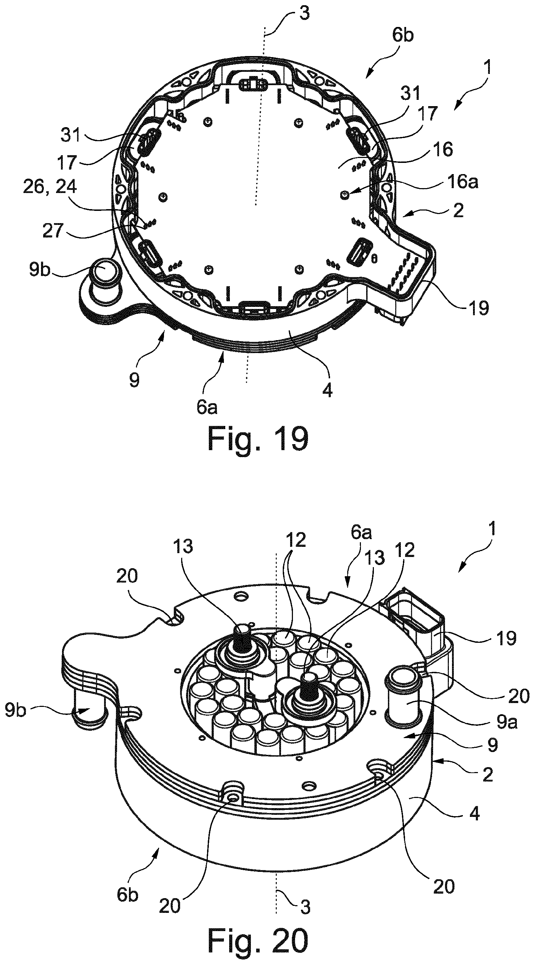

Fig. 6 now shows a view of the carrier 2 with the transistor plates 7 from a side facing the second region 6b of the carrier 2. Fig. 7 shows an enlarged cutout of Fig. 6. The carrier ring 5 has a contact opening 23 for the respective transistor plate 7, so that contact points of the respective transistor plate 7 are able to be reached from a side of the carrier ring 5 facing the second region 6b. Furthermore the inverter 1 has a plurality of electrically conductive contact pins 24, which are cast into the carrier ring 5. The contact pins 24 are arranged around the contact opening 23 and are electrically contacted with contact points of the respectively transistor plate 7 via respectively an electrically conductive wire 25. The respective wire 25 is wire bonded here with the associated contact point and with the associated contact pin 24. The respective contact pin 24 is L-shaped here and extends in certain areas axially from the carrier ring 5 to the control board 16. On the respective contact pin 24 a thickening 26 is formed, facing the control board 16, which thickening then engages into a receiving opening 27 of the control board 16 - see also Fig. 19 in this respect - and secures the contact pin 24 in the control board 16 in a clamping manner. The contact busbars 18 arranged in the slots of the carrier ring 5 are electrically contacted with the circuit boards 7.

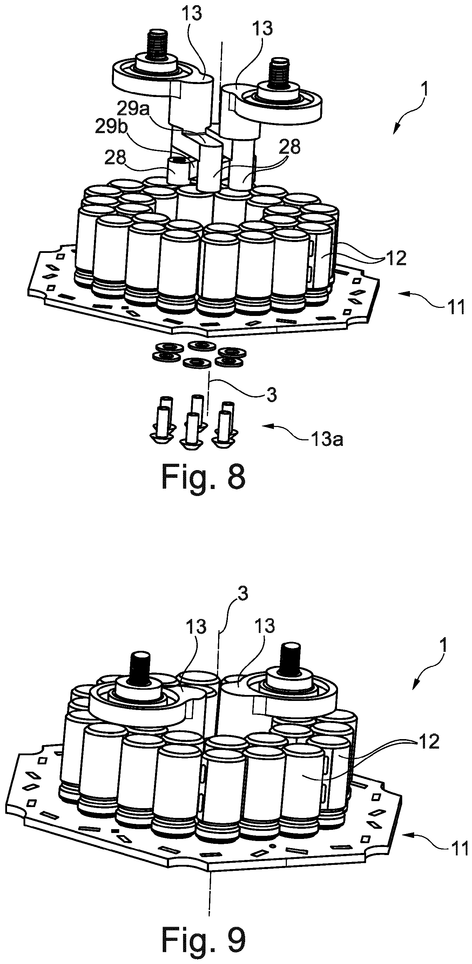

Fig. 8 shows an exploded view and Fig. 9 shows a view of the mounted state of the capacitor plate 11, of the battery clamps 13 and of the screw assembly 13a. The battery clamps 13 are configured identically to one another and are fastened centrally on the capacitor plate 11 by the screw assembly 13a. The respective battery clamp 13 is formed by a connecting piece with a dielectric casing and internal electrically conductive lines. The respective battery clamp 13 has here a total of three pole contacts 28, which are electrically contacted with the capacitors 12 of the capacitor plate 11 by means respectively of an associated screw of the screw assembly 13a and via electrically conductive lines. The pole contacts 28 of the battery clamps 13 are arranged here in a circle and centrally on the capacitor plate 11. The capacitors 12 surround the pole contacts 28 of the battery clamps and are arranged symmetrically on the capacitor plate 11. One battery clamp 13 is associated here with the minus pole and the other battery clamp 13 is associated with the plus pole.

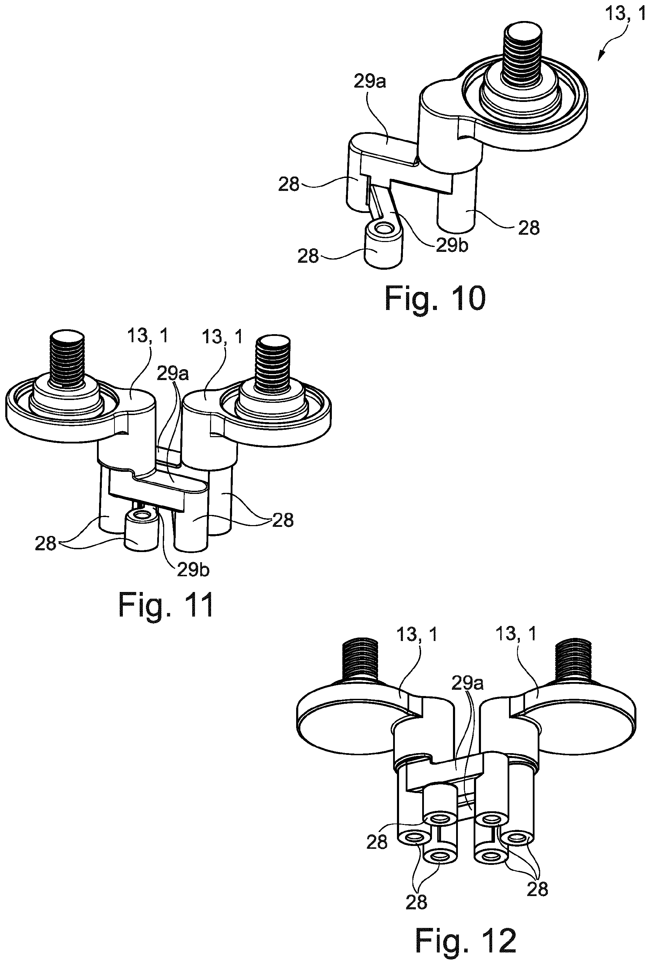

Fig. 10 now shows a view of the individual battery clamp 13. Fig. 11 and Fig. 12 show views of the battery clamps 13. The respective battery clamp 13 has here a first bridge 29a parallel to the capacitor plate 11, and a second bridge 29b parallel to the capacitor plate 11. The first bridge 29a and the second bridge 29b are formed here offset axially with respect to one another. The respective bridge 29a or respectively 29b connects here two of the pole contacts 28 of the respective battery clamp 13 with one another in an electrically conductive manner. As can be seen in Fig. 11 and Fig. 12, the first bridge 29a of the one battery clamp 13 bridges the second bridge 29b of the other battery clamp 13, so that the pole contacts 28 of the battery clamps 13 are arranged in a circle and alternating with respect to one another in a circle.

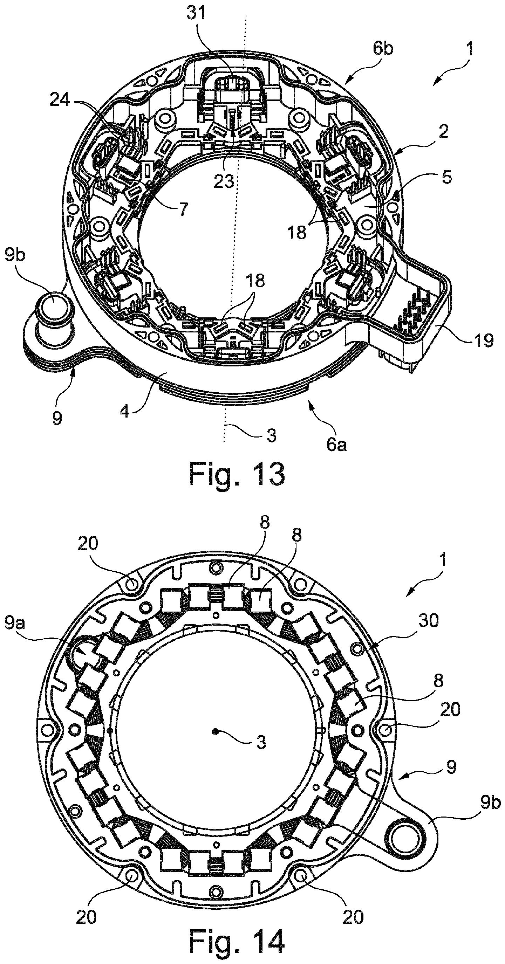

Fig. 13 shows a view of the carrier 2 with the transistor plates 7 and the cooling plate 9 from a side facing the second region 6b of the carrier 2. As can be seen here, the ring-shaped cooling plate 9 lies in the first region 6a of the carrier 2 against the transistor plates 7 in a heat-transferring manner. Fig. 14 shows a view of the cooling plate 9 with transistors 8 of the respective transistor plates 7. The transistor plates 7 are illustrated transparent here, for clarity.

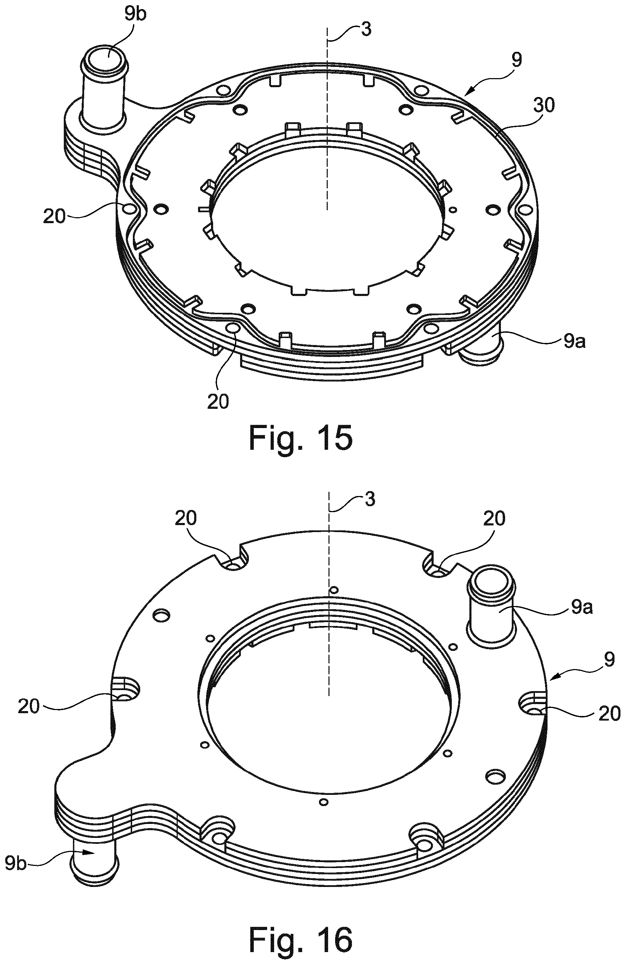

Fig. 15 shows a view of the cooling plate 9 from a side facing the carrier 2, and Fig. 16 shows a view of the cooling plate 9 from a side facing away from the carrier 2. The cooling plate 9 - as is already explained above - has the inlet 9a and the outlet 9b and is able to be flowed through by the cooling fluid. In Fig. 14 and Fig. 15 in addition a circumferential groove 30 can be seen, in which the wall 4 of the carrier 2 is received in a form-fitting and non-displaceable manner.

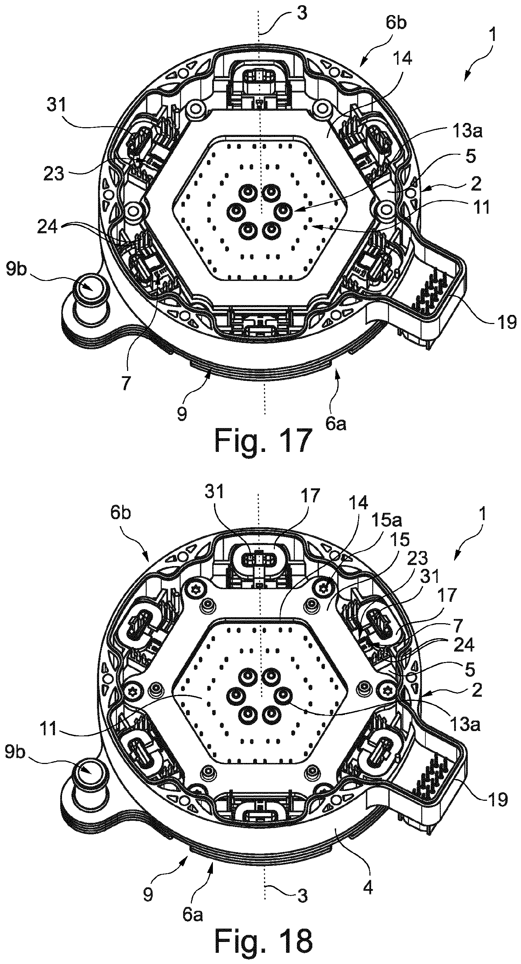

Fig. 17 shows a view of the carrier 2 with the foam plate 14 and Fig. 18 shows a view of the carrier 2 with the pressure plate 15 from a side facing the second region 6b of the carrier 2. The pressure plate 15 is connected here through the screw assembly 15a with the cooling plate 9 through the carrier ring 5 and presses the foam plate 14 against the capacitor plate 11, and the capacitor plate 11 against the contact busbars 18. Thereby, the contact busbars 18 are also pressed between the transistor plates 7 and the capacitor plate 11 and connect the transistor plates 7 and the capacitor plate 11 with one another in an electrically conductive manner. As can be seen in Fig. 18, the iron cores 17 are arranged in mounts 31 of the carrier ring 5. The mounts 31 are provided for receiving phase terminals 35 of the electric motor 32.

Fig. 19 shows a view of the carrier 2 with the control board 16 from a side facing the second region 6b of the carrier 2. The thickenings 26 of the contact pins 24 engage here into the receiving openings 27 of the control board 16, whereby the contact pins 24 are secured in a force-fitting manner in the control board 16. The control board 16 is screwed to the pressure plate 15 via the screw assembly 16a.

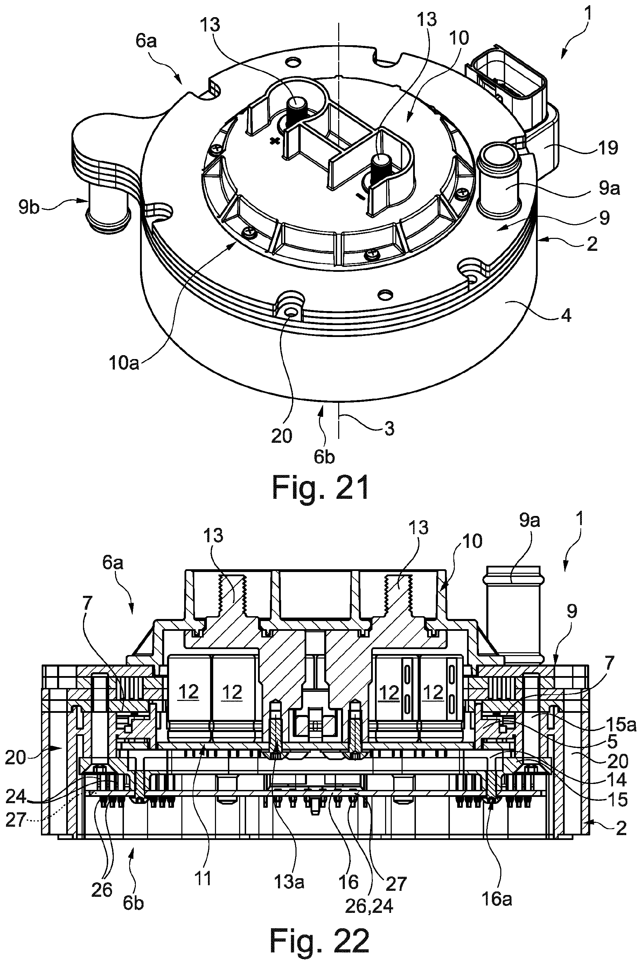

Fig. 20 shows a view of the inverter 1 without the cover 10, and Fig 21 shows a view of the inverter 1 with the cover 10 from a side facing the first region 6a of the carrier 2. As can be seen in Fig. 20, the battery clamps 13 project through the carrier ring 5 and the cooling plate 9 axially outwards, and the capacitors 12 are arranged on the capacitor plate 11 symmetrically around the battery clamps 13. In Fig. 21 it can be seen that the cover 10 is screwed to the cooling plate 9 by means of the screw assembly 10a, and the battery clamps 13 project outwards through the cover 10.

Fig. 22 shows a sectional view of the inverter 1. The capacitor plate 11 lies in the second region 6b of the carrier 2 against the carrier ring 5, and the capacitors 12 of the capacitor plate 11 project through an opening of the carrier ring 5 into the first region 6a of the carrier 2. The pressure plate 15 is firmly connected to the cooling plate 9, so that the foam plate 14, the capacitor plate 11, the contact busbars 18, and the transistor plates 7 are pressed together i.e. are sandwiched between the pressure plate 15 and the cooling plate 9. The capacitor plate 11 is pressed here by the foam plate 14 and the pressure plate 15 against the contact busbars 18. The transistor plates 7 are secured in the first region 6a of the carrier 2 on the carrier ring 5 and are distributed around the opening of the carrier ring 5 and therefore around the capacitors 12. The contact busbars 18 are pressed here between the capacitor plate 11 and the transistor plates 7 and thereby the transistor plates 7 and the capacitor plate 11 are electrically contacted with one another. The battery clamps 13 are fastened centrally on the capacitor plate 11 and project through the opening of the carrier ring 5 out from the second region 6b into the first region 6a of the carrier 2. Furthermore, the battery clamps 13 are guided axially outwards through the cover 10 of the inverter. The control board 16 is arranged in the second region 6b of the carrier 2 and screwed with the pressure plate 15. The control board 16 is electrically contacted with the transistor plates 7 via the contact pins 24 in the carrier 2.

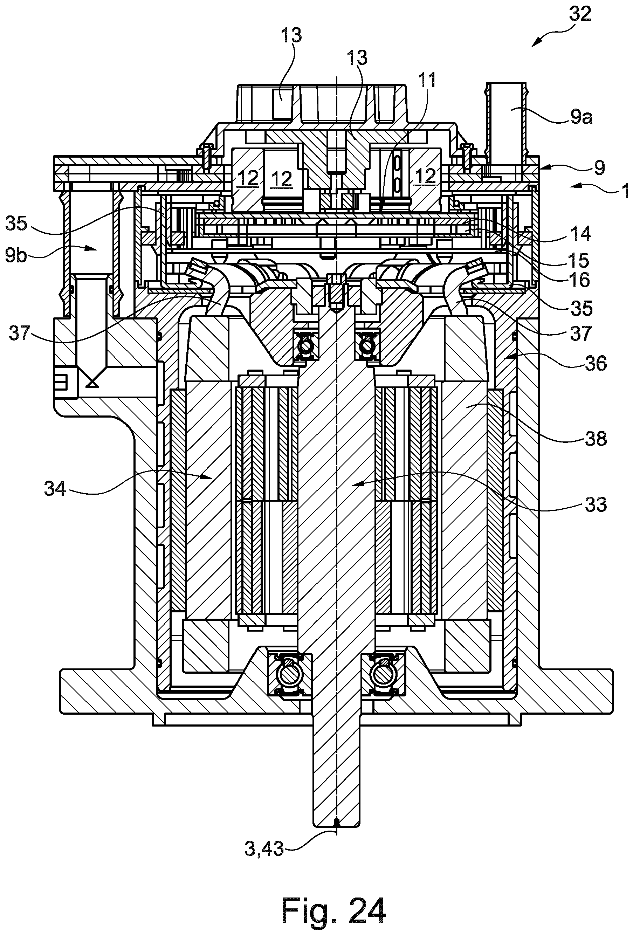

Fig. 23 shows an exploded view and Fig. 24 shows a sectional view of an electric motor 32 according to the invention. The electric motor 32 comprises a rotor 33 and a stator 34, which interact with one another electromagnetically. The rotor 33 is rotatable here about a rotation axis 43, which coincides with the central axis 3 of the carrier 2 or respectively of the inverter 1. The stator 34 comprises a plurality of coils 38 and a stator housing 36 which receives the coils 38. The rotor 33 is arranged in the stator 34, so that the coils 38 and the stator housing 36 surround the rotor 33. The inverter 1 is arranged axially to the stator 34 and is securely connected with the stator housing 36 via a screw assembly 36a. For this, the continuous screw openings 20 are provided in the cooling plate 9 of the inverter 1. The stator 34 is electrically contacted with the inverter 1 via several phase terminals 35, for which the phase terminals 35 engage into the mounts 31 of the inverter 1 and are connected with the transistor plates 7 of the inverter 1 in an electrically conductive manner. The phase terminals 35 are symmetrically distributed here around the rotation axis 43 and arranged radially externally on associated coil wires 36.

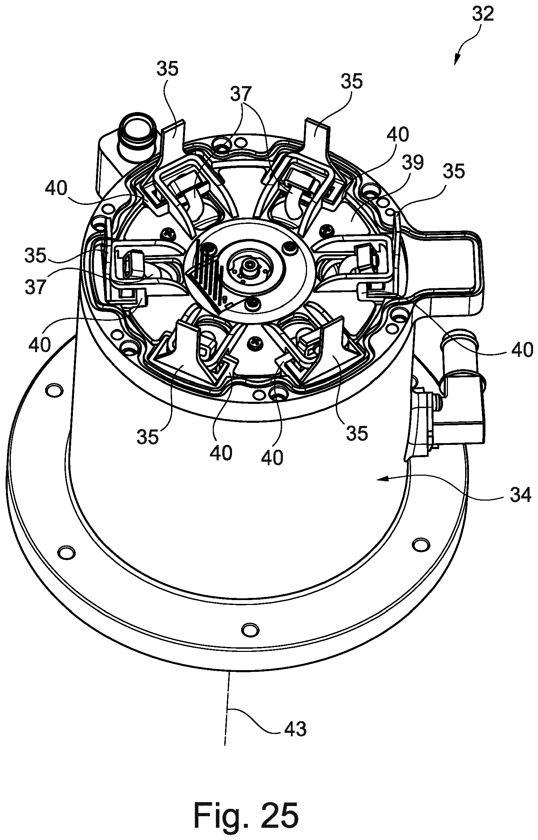

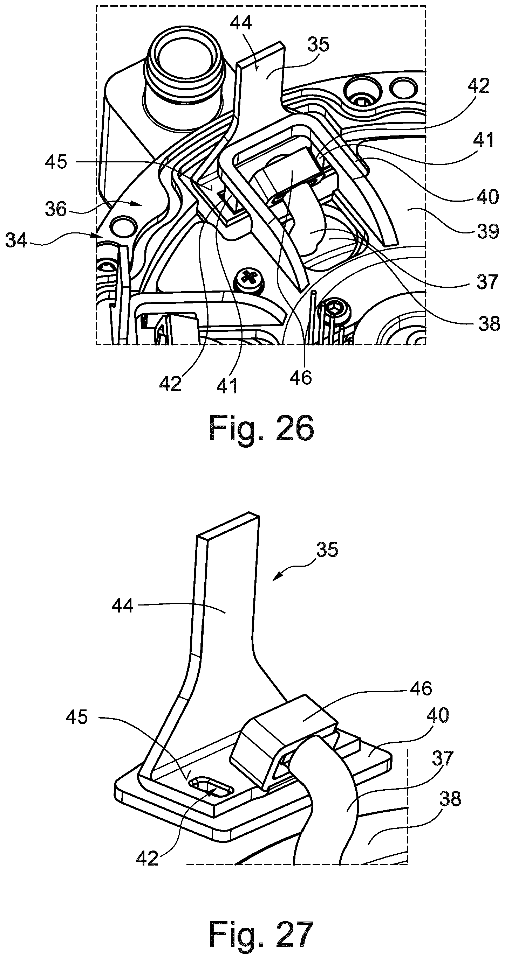

Fig. 25 shows a view of the electric motor 32 without the inverter 1. Fig. 26 and Fig. 27 show views of the individual phase terminal 35 in the electric motor 32. The phase terminals 35 are arranged radially externally on the associated coil wires 37 and are connected with these in an electrically conductive manner. The respective coil wire 37 engages here radially into the respective phase terminal 35. The respective phase terminal 35 is L-shaped here and pressed with a pressure ring 39 against the stator 34 or respectively against the stator housing 36. The respective phase terminal 35 comprises a contact region 44 projecting axially from the stator 34 and a securing region 45 aligned transversely to the rotation axis 43. The contact region 44 of the phase terminal 35 changes axially in width in direction to the securing region 45, so that an adequate pressure can achieve by contact the respective phase terminal 35 with the inverter 1. The contact region 45 and the securing region 46 are integrally formed on each other. In other words, the phase terminal 35 is formed in one piece from a single folded piece of sheet metal. The phase terminal 35 further comprises a clamping unit 46 which is integrally formed out on the securing region 45.

Between the respective phase terminal 35 and the stator 34 or respectively the stator housing 36, an elastically deformable base i.e. an elastically deformable underlay plate 40 is respectively arranged. As can be seen particularly well in Fig. 26, the pressure ring 39 for the respective phase terminal 35 has two position projections 41. The position projections 41 engage in position openings 42 of the respective phase terminal 35, whereby the phase terminals 35 are secured in the correct position on the stator 34. Advantageously, the respective phase terminal 35 is biased by the base 40 towards the contact surface of inverter 1, so that the contact surface of the respective phase terminal 35 is pressed onto the contact surface on the respective transistor board 7. The transistor boards 7 do not therefore require any special contact components.

The inverter 1 according to the invention can be finish-mounted independently of further elements of the electric motor 32. Thereby, both the effort and also the costs can be reduced. In addition, the inverter 1 can be electrically contacted with the stator 34 in a simplified and reliable manner.

## Claims

1. An electric motor (32),
- wherein the electric motor (32) comprises a rotor (33), which is rotatable about a rotation axis (43), and a stator (34) which interact with one another electromagnetically,
- wherein the stator (34) comprises a plurality of stator coils (38), wherein at least some of the stator coils (38) are electrically contacted via their coil wires (37) directly with three electric phases,
- wherein the electric motor (32), for each phase, comprises at least one electrically conductive phase terminal (35), which is connected with the associated coil wire (37) in an electrically conductive manner,
- wherein the phase terminals (35) are secured on a stator housing (36) of the stator (34),
- that the respective phase terminal (35) comprises a contact region (44) projecting axially from the stator (34) for contacting an inverter (1), and a securing region (45) arranged transversely to the rotation axis (43) on the stator housing (36),
**characterized in**
- **that** an elastically deformable underlay plate (40) is directly clamped between the respective phase terminal (35) and the stator housing (36) of the stator (34),
- **that** the electric motor (32) has a pressure ring (39) which is secured on the stator housing (36) of the stator (34), and
- **that** the pressure ring (39) presses the respective phase terminal (35) against the stator housing (36) of the stator (34) and thereby secures the respective phase terminal (35) on the stator housing (36) of the stator (34).

2. The motor according to Claim 1,
**characterized in**
- **that** the axially width of the contact region (44) grows in direction to the securing region (45) to achieve an adequate pressure by contact the respective phase terminal (35) with the inverter (1).

3. The motor according to Claim 1 or 2,
**characterized in**
- **that** the pressure ring (39) for the respective phase terminal (35) has two position projections (41) and two position openings (42) are formed in the respective phase terminal (35), and
- **that** the position projections (41) engage into the position openings (42) and thereby the phase terminals (35) are secured in the correct position on the stator (34).

4. The motor according to one of Claims 1 to 3,
**characterized in**
- **that** the respective phase terminal (35) lies radially externally from the associated coil wire (37) and thereby the associated coil wire (37) engages radially into the respective phase terminal (35), and/or
- **that** the phase terminals (35) are secured on the stator housing (36) of the stator (34) in a symmetrically distributed manner around the rotation axis (43), and/or
- **that** the respective phase terminal (35) is formed in one piece from a single folded piece of sheet metal.

5. The motor according to one of Claims 1 to 4,
**characterized in**
- **that** the electric motor (32) has an inverter (1) which comprises a capacitor plate (11) with a plurality of capacitors (12), a plurality of transistor plates (7) with respectively a plurality of transistors (8), a cooling plate (9) and a control board (16), and
- **that** the inverter (1) is fastened axially on the stator (34) and facing the phase terminals (35), wherein the phase terminals (35) engage axially into the inverter (1) and are electrically contacted with the transistor plates (7) of the inverter (1).

6. The motor according to Claim 5,
**characterized in**
- **that** the inverter (1) comprises a hollow-cylindrical carrier (2) with a central axis (3), which carries the transistor plates (7), the capacitor plate (11) and the control board (16) and surrounds them in circumferential direction to the exterior, and
- **that** the respective transistor plates (7), the capacitor plate (11) and the control board (16) lie axially over one another in the carrier (2) and are electrically connected with one another, and
- **that** the carrier (2) is fastened to the stator (34), wherein the central axis (3) of the carrier (2) coincides with the rotation axis (43) of the rotor (33).

7. Motor according to Claim 5 or 6,
**characterized in**
- **that** the control board (16) is arranged facing the stator (34) and the capacitor plate (11) is arranged between the control board (16) and the transistor plates (7), and
- **that** the phase terminals (35) engage axially into the inverter (1) and are directed past the control board (16) and the capacitor plate (11) to the transistor plates (7).

8. The motor according to one of Claims 5 to 7,
**characterized in**
- **that** a carrier ring (5) is formed integrally in the carrier (2), which carrier ring is ring-shaped and is aligned transversely to the central axis (3), and
- **that** the transistor plates (7) are fastened on the carrier ring (5) facing away from the stator (34) and distributed running around the central axis (3), and in a clamping manner.

9. The motor according to Claim 8,
**characterized in**
- **that** a plurality of contact pins (24) is cast into the carrier ring (5), which are aligned axially from the transistor plates (7) to the control board (16) and to the stator (34), and
- **that** the respective transistor plate (7) is wire bonded with the respective associated contact pins (24) via electrically conductive wires (25) and thereby is electrically contacted with the contact pins (24),
- **that** the respective contact pin (24) has respectively an end-side thickening (26) towards the control board (16), and the control board (16) has a receiving opening (27) for the respective thickening (26), and
- **that** the respective thickening (26) engages into the respective receiving opening (27) and thereby the respective contact pin (24) is fastened in the control board (16) in a clamping manner and is electrically contacted with the control board (16).

10. The motor according to Claim 8 or 9,
**characterized in**
- **that** the capacitor plate (11), an elastically deformable foam plate (14) and a pressure plate (15) are arranged on the carrier ring (5), facing away from the transistor plates (7), and
- **that** in the carrier ring (5) a plurality of axial slots is formed, in which respectively a contact busbar (18) is received, and
- **that** the pressure plate (15) is firmly connected with the cooling plate (9) and presses the capacitor plate (11) against the contact busbars (18) via the foam plate (14), and
- **that** the respective contact busbar (18) is pressed between the respective transistor plate (7) and the capacitor plate (11) and thereby the transistor plates (7) are electrically contacted with the capacitor plate (11).

11. The motor according to one of Claims 5 to 10,
**characterized in**
- **that** the cooling plate (9) is ring-shaped and is able to be flowed through by a cooling fluid, and
- **that** the cooling plate (9) is fastened on the pressure plate (15) and facing away from the stator (34), and
- **that** the transistor plates (7) lie against the cooling plate (9) in a heat-transferring manner, and the capacitors (12) of the capacitor plate (11) are axially directed through a central opening of the cooling plate (9) and are pressed radially against the cooling plate (9) in a heat-transferring manner.

12. The motor according to one of Claims 5 to 11,
**characterized in**
- **that** the inverter (1) comprises two battery clamps (13) which are identical to one another, which are fastened centrally on the capacitor plate (11) and are aligned to the transistor plates (7), and
- **that** the respective battery clamp (13) is formed by a connecting piece with a dielectric casing and internal electrically conductive lines and has respectively three pole contacts (28) for contacting with the capacitor plate (11), and
- **that** the pole contacts (28) of the one battery clamp (13) and the pole contacts (28) of the other battery clamp (13) are arranged on the capacitor plate (11) in a circle and are arranged alternating with respect to one another in a circle.

13. The motor according to Claim 12,
**characterized in**
- **that** the respective battery clamp (13) has a first bridge (29a) parallel to the capacitor plate (11), which bridge connects the central pole contact (28) with the one lateral pole contact (28) in an electrically conductive manner, and
- **that** the respective battery clamp (13) has a second bridge (29b) parallel to the capacitor plate, which bridge connects the central pole contact (28) with the other lateral pole contact (28) in an electrically conductive manner, and
- **that** the first bridge (29a) and the second bridge (29b) are aligned at an angle with respect to one another and are offset axially with respect to one another, and
- **that** respectively the first bridge (29a) of the one battery clamp (13) bridges the second bridge (29b) of the other battery clamp (13).

14. The motor according to Claim 12 or 13,
**characterized in**
**that** the battery clamps (13) are directed through an opening of the ring-shaped carrier ring (5) and outwards past the transistor plates (7) distributed around the central axis (3).

## Patentansprüche

1. Elektromotor (32),
- wobei der Elektromotor (32) einen Rotor (33), der um eine Drehachse (43) drehbar ist, und einen Stator (34) umfasst, die elektromagnetisch miteinander zusammenwirken,
- wobei der Stator (34) eine Vielzahl von Statorspulen (38) umfasst, wobei zumindest einige der Statorspulen (38) über ihre Spulendrähte (37) elektrisch direkt mit drei elektrischen Phasen kontaktiert sind, und
- wobei der Elektromotor (32) für jede Phase zumindest einen elektrisch leitende Phasenklemme (35) umfasst, welche mit dem zugehörigen Spulendraht (37) elektrisch leitend verbunden ist,
- wobei die Phasenklemmen (35) an einem Statorgehäuse (36) des Stators (34) befestigt sind,
- dass der jeweilige Phasenklemme (35) einen axial von dem Stator (34) herausragenden Kontaktbereich (44) zum Kontaktieren eines Wechselrichters (1) und einen quer zu der Drehachse (43) an dem Statorgehäuse (36) angeordneten Befestigungsbereich (45) umfasst,
**dadurch gekennzeichnet,**
- **dass** zwischen der jeweiligen Phasenklemme (35) und dem Statorgehäuse (36) des Stators (34) direkt eine elastisch verformbare Unterlegplatine (40) eingeklemmt ist,
- **dass** der Elektromotor (32) einen Druckring (39) aufweist, welcher an dem Statorgehäuse (36) des Stators (34) befestigt ist, und
- **dass** der Druckring (39) die jeweilige Phasenklemme (35) gegen das Statorgehäuse (36) des Stators (34) drückt und dadurch die jeweilige Phasenklemme (35) an dem Statorgehäuse (36) des Stators (34) befestigt.

2. Motor nach Anspruch 1,
**dadurch gekennzeichnet,**
- **dass** die axiale Breite des Kontaktbereichs (44) in Richtung des Befestigungsbereichs (45) zunimmt, um einen ausreichenden Druck beim Kontaktieren der jeweiligen Phasenklemme (35) mit dem Wechselrichter (1) zu erreichen.

3. Motor nach Anspruch 1 oder 2,
**dadurch gekennzeichnet,**
- **dass** der Druckring (39) für die jeweilige Phasenklemme (35) zwei Positionsvorsprünge (41) aufweist und in der jeweiligen Phasenklemme (35) zwei Positionsöffnungen (42) gebildet sind, und
- **dass** die Positionsvorsprünge (41) in die Positionsöffnungen (42) eingreifen und dadurch die Phasenklemmen (35) in der korrekten Position an dem Stator (34) befestigt werden.

4. Motor nach einem der Ansprüche 1 bis 3,
**dadurch gekennzeichnet,**
- **dass** die jeweilige Phasenklemme (35) radial außen von dem zugehörigen Spulendraht (37) liegt und dadurch der zugehörige Spulendraht (37) radial in der jeweiligen Phasenklemme (35) eingreift, und/oder
- **dass** die Phasenklemmen (35) auf eine symmetrisch um die Drehachse (43) verteilte Weise an dem Statorgehäuse (36) des Stators (34) befestigt sind, und/oder
- **dass** die jeweilige Phasenklemme (35) einstückig aus einem einzigen abgekanteten Blechstück gebildet ist.

5. Motor nach einem der Ansprüche 1 bis 4,
**dadurch gekennzeichnet,**
- **dass** der Elektromotor (32) einen Wechselrichter (1) aufweist, welcher eine Kondensatorplatine (11) mit einer Vielzahl von Kondensatoren (12), eine Vielzahl von Transistorplatinen (7) mit jeweils einer Vielzahl von Transistoren (8), eine Kühlplatine (9) und eine Steuerplatine (16) umfasst, und
- **dass** der Wechselrichter (1) axial an dem Stator (34) und den Phasenklemmen (35) zugewandt befestigt ist, wobei die Phasenklemmen (35) axial in den Wechselrichter (1) eingreifen und elektrisch mit den Transistorplatinen (7) des Wechselrichters (1) kontaktiert sind.

6. Motor nach Anspruch 5,
**dadurch gekennzeichnet,**
- **dass** der Wechselrichter (1) einen hohlzylindrischen Träger (2) mit einer Mittelachse (3) umfasst, welcher die Transistorplatinen (7), die Kondensatorplatine (11) und die Steuerplatine (16) trägt und diese in der Umfangsrichtung nach außen umgibt, und
- **dass** die jeweiligen Transistorplatinen (7), die Kondensatorplatine (11) und die Steuerplatine (16) in dem Träger (2) axial übereinanderliegen und elektrisch miteinander verbunden sind, und
- **dass** der Träger (2) an dem Stator (34) befestigt ist, wobei die Mittelachse (3) des Trägers (2) mit der Drehachse (43) des Rotors (33) zusammenfällt.

7. Motor nach Anspruch 5 oder 6,
**dadurch gekennzeichnet,**
- **dass** die Steuerplatine (16) dem Stator (34) zugewandt angeordnet ist und die Kondensatorplatine (11) zwischen der Steuerplatine (16) und den Transistorplatinen (7) angeordnet ist, und
- **dass** die Phasenklemmen (35) axial in den Wechselrichter (1) eingreifen und an der Steuerplatine (16) und der Kondensatorplatine (11) vorbei zu den Transistorplatinen (7) geführt sind.

8. Motor nach einem der Ansprüche 5 bis 7,
**dadurch gekennzeichnet,**
- **dass** ein Trägerring (5) n einem Stück in dem Träger (2)gebildet ist, wobei der Trägerring ringförmig und quer zu der Mittelachse (3) ausgerichtet ist, und
- **dass** die Transistorplatinen (7) auf dem dem Stator (34) abgewandten Trägerring (5) und um die Mittelachse (3) herum verlaufend verteilt und auf eine klemmende Weise befestigt sind.

9. Motor nach Anspruch 8,
**dadurch gekennzeichnet,**
- **dass** eine Vielzahl von Kontaktstiften (24) in den Trägerring (5) eingegossen ist, welche axial von den Transistorplatinen (7) zu der Steuerplatine (16) und zu dem Stator (34) ausgerichtet sind, und
- **dass** die jeweilige Transistorplatine (7) über elektrisch leitenden Drähte (25) mit den jeweils zugehörigen Kontaktstiften (24) drahtgebunden und dadurch elektrisch mit den Kontaktstiften (24) kontaktiert ist,
- **dass** der jeweilige Kontaktstift (24) zu der Steuerplatine (16) hin jeweils eine endseitige Verdickung (26) aufweist und die Steuerplatine (16) eine Aufnahmeöffnung (27) für die jeweilige Verdickung (26) aufweist, und
- **dass** die jeweilige Verdickung (26) in die jeweilige Aufnahmeöffnung (27) eingreift und dadurch der jeweilige Kontaktstift (24) klemmend in der Steuerplatine (16) befestigt und elektrisch mit der Steuerplatine (16) kontaktiert ist.

10. Motor nach Anspruch 8 oder 9,
**dadurch gekennzeichnet,**
- **dass** die Kondensatorplatine (11), eine elastisch verformbare Schaumstoffplatine (14) und eine Druckplatine (15) von den Transistorplatinen (7) abgewandt auf dem Trägerring (5) angeordnet sind, und
- **dass** in dem Trägerring (5) eine Vielzahl von axialen Schlitzen gebildet ist, in welchen jeweils eine Kontaktsammelschiene (18) aufgenommen ist, und
- **dass** die Druckplatine (15) fest mit der Kühlplatine (9) verbunden ist und über die Schaumstoffplatine (14) die Kondensatorplatine (11) gegen die Kontaktsammelschienen (18) drückt, und
- **dass** die jeweilige Kontaktsammelschiene (18) zwischen der jeweilige Transistorplatine (7) und der Kondensatorplatine (11) gedrückt wird, und dadurch die Transistorplatinen (7) mit der Kondensatorplatine (11) elektrisch kontaktiert sind.

11. Motor nach einem der Ansprüche 5 bis 10,
**dadurch gekennzeichnet,**
- **dass** die Kühlplatine (9) ringförmig ist und von einem Kühlfluid durchströmt werden kann, und
- **dass** die Kühlplatine (9) an der Druckplatine (15) befestigt ist und von dem Stator (34) abgewandt ist, und
- **dass** die Transistorplatinen (7) auf eine wärmeübertragende Weise an der Kühlplatine (9) anliegen, und die Kondensatoren (12) der Kondensatorplatine (11) axial durch eine zentrale Öffnung der Kühlplatine (9) geführt und radial auf eine wärmeübertragende Weise gegen die Kühlplatine (9) gedrückt werden.

12. Motor nach einem der Ansprüche 5 bis 11,
**dadurch gekennzeichnet,**
- **dass** der Wechselrichter (1) zwei zueinander identische Batterieklemmen (13) umfasst, welche mittig auf der Kondensatorplatine (11) befestigt und mit den Transistorplatine (7) ausgerichtet sind, und
- **dass** die jeweilige Batterieklemme (13) durch ein Anschlussstück mit einer dielektrischen Ummantelung und innenliegenden elektrisch leitenden Leitungen gebildet ist und jeweils drei Polkontakte (28) zum Kontaktieren mit der Kondensatorplatine (11) aufweist, und
- **dass** die Polkontakte (28) der einen Batterieklemme (13) und die Polkontakte (28) der anderen Batterieklemme (13) auf der Kondensatorplatine (11) in einem Kreis angeordnet sind und abwechselnd in Bezug zueinander in einem Kreis angeordnet sind.

13. Motor nach Anspruch 12,
**dadurch gekennzeichnet,**
- **dass** die jeweilige Batterieklemme (13) eine erste Brücke (29a) aufweist, die parallel zur Kondensatorplatine (11) ist, wobei die Brücke den mittleren Polkontakt (28) mit dem einen seitlichen Polkontakt (28) elektrisch leitend verbindet, und
- **dass** die jeweilige Batterieklemme (13) eine zweite Brücke aufweist, die parallel zur Kondensatorplatine ist, wobei die Brücke den mittleren Polkontakt (28) mit dem anderen seitlichen Polkontakt (28) elektrisch leitend verbindet, und
- **dass** die erste Brücke (29a) und die zweite Brücke (29b) in Bezug zueinander in einem Winkel ausgerichtet und in Bezug zueinander axial versetzt sind, und
- **dass** jeweils die erste Brücke (29a) der einen Batterieklemme (13) die zweite Brücke (29b) der anderen Batterieklemme (13) überbrückt,

14. Motor nach Anspruch 12 oder 13,
**dadurch gekennzeichnet,**
**dass** die Batterieklemmen (13) durch eine Öffnung des ringförmigen Trägerrings (5) hindurch und nach außen an den um die Mittelachse (3) verteilten Transistorplatinen (7) vorbeigeführt sind.

## Revendications

1. Moteur électrique (32),
- dans lequel le moteur électrique (32) comprend un rotor (33), qui peut tourner autour d'un axe de rotation (43), et un stator (34) qui interagissent l'un avec l'autre de manière électromagnétique,
- dans lequel le stator (34) comprend une pluralité de bobines de stator (38), dans lequel au moins certaines des bobines de stator (38) sont en contact électrique par le biais de leurs fils de bobine (37) directement avec trois phases électriques,
- dans lequel le moteur électrique (32), pour chaque phase, comprend au moins une borne de phase électroconductrice (35), qui est reliée au fil de bobine associé (37) d'une manière électroconductrice,
- dans lequel les bornes de phase (35) sont fixées sur un boîtier de stator (36) du stator (34),
- que la borne de phase respective (35) comprend une région de contact (44) faisant saillie axialement à partir du stator (34) pour venir en contact avec un onduleur (1), et une région de fixation (45) agencée transversalement à l'axe de rotation (43) sur le boîtier de stator (36),
**caractérisé en ce**
- **qu'**une plaque de support élastiquement déformable (40) est directement serrée entre la borne de phase respectives (35) et le boîtier de stator (36) du stator (34),
- **que** le moteur électrique (32) présente un anneau de pression (39) qui est fixé sur le boîtier de stator (36) du stator (34), et
- **que** l'anneau de pression (39) presse la borne de phase respective (35) contre le boîtier de stator (36) du stator (34) et, de ce fait, fixe la borne de phase respective (35) sur le boîtier de stator (36) du stator (34).

2. Moteur selon la revendication 1,
**caractérisé en ce**
- **que** la largeur axiale de la région de contact (44) augmente en direction de la région de fixation (45) pour obtenir une pression adéquate en mettant en contact la borne de phase respective (35) avec l'onduleur (1).

3. Moteur selon la revendication 1 ou 2,
**caractérisé en ce**
- **que** l'anneau de pression (39) pour la borne de phase respective (35) présente deux saillies de position (41) et deux ouvertures de position (42) sont formées dans la borne de phase respective (35), et
- **que** les saillies de position (41) s'engagent dans les ouvertures de position (42) et, de ce fait, les bornes de phase (35) sont fixées dans la position correcte sur le stator (34).

4. Moteur selon l'une des revendications 1 à 3,
**caractérisé en ce**
- **que** la borne de phase respective (35) se trouve radialement à l'extérieur du fil de bobine (37) associé et, de ce fait, le fil de bobine associé (37) s'engage radialement dans la borne de phase respective (35), et/ou
- **que** les bornes de phase (35) sont fixées sur le boîtier de stator (36) du stator (34) de manière symétriquement répartie autour de l'axe de rotation (43), et/ou
- **que** la borne de phase respective (35) est formée d'un seul tenant à partir d'une seule pièce de tôle pliée.

5. Moteur selon l'une des revendications 1 à 4,
**caractérisé en ce**
- **que** le moteur électrique (32) comporte un onduleur (1) qui comprend une plaque de condensateur (11) avec une pluralité de condensateurs (12), une pluralité de plaques de transistor (7) avec respectivement une pluralité de transistors (8), une plaque de refroidissement (9) et une carte de commande (16), et
- l'onduleur (1) est fixé axialement sur le stator (34) et en face des bornes de phase (35), dans lequel les bornes de phase (35) s'engagent axialement dans l'onduleur (1) et sont en contact électrique avec les plaques de transistor (7) de l'onduleur (1).

6. Moteur selon la revendication 5,
**caractérisé en ce**
- **que** l'onduleur (1) comprend un support cylindrique creux (2) avec un axe central (3), qui porte les plaques de transistor (7), la plaque de condensateur (11) et la carte de commande (16) et les entoure dans une direction circonférentielle vers l'extérieur, et
- **que** les plaques de transistor respectives (7), la plaque de condensateur (11) et la carte de commande (16) se trouvent axialement les unes au-dessus des autres dans le support (2) et sont électriquement reliées les unes aux autres, et
- **que** le support (2) est fixé au stator (34), dans lequel l'axe central (3) du support (2) coïncide avec l'axe de rotation (43) du rotor (33).

7. Moteur selon la revendication 5 ou 6,
**caractérisé en ce**
- **que** la carte de commande (16) est agencée face au stator (34) et la plaque de condensateur (11) est agencée entre la carte de commande (16) et les plaques de transistor (7), et
- **que** les bornes de phase (35) s'engagent axialement dans l'onduleur (1) et sont dirigées au-delà de la carte de commande (16) et de la plaque de condensateur (11) vers les plaques de transistor (7).

8. Procédé selon l'une des revendications 5 à 7,
**caractérisé en ce**
- **qu'**un anneau porteur (5) est formé d'un seul tenant dans le support (2), lequel anneau porteur est de forme annulaire et est aligné transversalement à l'axe central (3), et
- **que** les plaques de transistor (7) sont fixées sur l'anneau porteur (5) à l'opposé du stator (34) et réparties autour de l'axe central (3), et de manière serrée.

9. Moteur selon la revendication 8,
**caractérisé en ce**
- **qu'**une pluralité de broches de contact (24) sont coulées dans l'anneau porteur (5), qui sont alignées axialement depuis les plaques de transistor (7) vers la carte de commande (16) et vers le stator (34), et
- **que** la plaque de transistor respective (7) est liée par fil aux broches de contact associées respectives (24) par le biais de fils électroconducteurs (25) et, de ce fait, est en contact électrique avec les broches de contact (24),
- **que** la broche de contact respective (24) présente respectivement un épaississement côté extrémité (26) vers la carte de commande (16), et la carte de commande (16) présente une ouverture de réception (27) pour l'épaississement (26) respectif, et
- **que** l'épaississement respectif (26) s'engage dans l'ouverture de réception respective (27) et, de ce fait, la broche de contact respective (24) est fixée par serrage dans la carte de commande (16) et est en contact électrique avec la carte de commande (16).

10. Moteur selon la revendication 8 ou 9,
**caractérisé en ce**
- **que** la plaque de condensateur (11), une plaque de mousse élastiquement déformable (14) et une plaque de pression (15) sont agencées sur l'anneau porteur (5), à l'opposé des plaques de transistor (7), et
- en ce que dans l'anneau porteur (5), une pluralité de fentes axiales sont formées, dans lesquelles respectivement une barre omnibus de contact (18) est reçue, et
- **que** la plaque de pression (15) est fermement reliée à la plaque de refroidissement (9) et presse la plaque de condensateur (11) contre les barres omnibus de contact (18) par le biais de la plaque en mousse (14), et
- **que** la barre omnibus de contact respective (18) est pressée entre la plaque de transistor respective (7) et la plaque de condensateur (11) et, de ce fait, les plaques de transistor (7) sont en contact électrique avec la plaque de condensateur (11).

11. Moteur selon l'une des revendications 5 à 10,
**caractérisé en ce**
- **que** la plaque de refroidissement (9) est de forme annulaire et peut être traversée par un fluide de refroidissement, et
- **que** la plaque de refroidissement (9) est fixée sur la plaque de pression (15) et orientée à l'opposé du stator (34), et
- **que** les plaques de transistor (7) reposent contre la plaque de refroidissement (9) de manière à transférer la chaleur et les condensateurs (12) de la plaque de condensateur (11) sont dirigés axialement à travers une ouverture centrale de la plaque de refroidissement (9) et sont pressés radialement contre la plaque de refroidissement (9) de manière à transmettre la chaleur.

12. Moteur selon l'une des revendications 5 à 11,
**caractérisé en ce**
- **que** l'onduleur (1) comprend deux cosses de batterie (13) identiques l'une à l'autre, qui sont fixées au centre sur la plaque de condensateur (11) et sont alignées sur les plaques de transistor (7), et
- **que** la cosse de batterie respective (13) est formée par une pièce de liaison avec un boîtier diélectrique et des lignes intérieures électroconductrices et présente respectivement trois contacts polaires (28) pour venir en contact avec la plaque de condensateur (11), et
- **que** les contacts polaires (28) d'une cosse de batterie (13) et les contacts polaires (28) de l'autre cosse de batterie (13) sont agencés en cercle sur la plaque de condensateur (11) et sont agencés en alternance les uns par rapport aux autres en cercle.

13. Moteur selon la revendication 12,
**caractérisé en ce**
- **que** la cosse de batterie respective (13) présente un premier pont (29a) parallèle à la plaque de condensateur (11), lequel pont relie le contact polaire central (28) avec l'un des contacts polaires latéraux (28) de manière électroconductrice, et
- **que** la cosse de batterie respective (13) présente un second pont (29b) parallèle à la plaque de condensateur, lequel pont relie le contact polaire central (28) à l'autre contact polaire latéral (28) de manière électroconductrice, et
- **que** le premier pont (29a) et le second pont (29b) sont alignés selon un angle l'un par rapport à l'autre et sont décalés axialement l'un par rapport à l'autre, et
- **que** respectivement le premier pont (29a) de l'une des cosses de batterie (13) est relié au second pont (29b) de l'autre cosse de batterie (13).

14. Procédé selon la revendication 12 ou 13,
**caractérisé en ce**
**que** les cosses de batterie (13) sont dirigées à travers une ouverture de l'anneau porteur de forme annulaire (5) et vers l'extérieur au-delà des plaques de transistor (7) réparties autour de l'axe central (3).
